# EUROPÄISCHE PATENTSCHRIFT

(11) **EP 3 214 711 B1**
(45) Veröffentlichungstag und Bekanntmachung des Hinweises auf die Patenterteilung: **30.01.2019**
(21) Anmeldenummer: 17156661.5
(22) Anmeldetag: 17.02.2017
(51) Int. Cl.: H02G 3/04

(54) **INSTALLATIONSBOX**
INSTALLATION BOX
BOÎTE D'INSTALLATION

(30) Priorität: 01.03.2016 DE 202016101089 U
(43) Veröffentlichungstag der Anmeldung: 06.09.2017
(73) Patentinhaber: OBO Bettermann GmbH & Co. KG, 58710 Menden (DE)
(72) Erfinder: Gehling, Andreas Große, 58710 Menden (DE); Kutschelis, Kevin, 58638 Iserlohn (DE); Ring, Stefan, 59192 Bergkamen (DE)
(74) Vertreter: Haverkamp, Jens

(56) Entgegenhaltungen:
- EP-A1- 2 802 049
- US-A1- 2009 159 312

## Beschreibung

Die Erfindung betrifft eine Installationsbox, einzusetzen in einen Wand-, Decken- oder Bodendurchbruch, zum Durchleiten einer Installation und zur Bereitstellung eines im Brandfalle selbsttätig die Brandseite abschottenden Verschlusskörpers, welche Installationsbox aus zumindest zwei einzelnen Modulteilen zusammengesetzt ist, wobei der Verbund der Modulteile sich miteinander zusammenwirkende Steckverbindungsglieder zusammengehalten ist und die komplementären Steckverbindungsglieder durch Stecklaschen als männliche Steckverbindungsglieder und durch Laschenaufnahmen als weibliche Steckverbindungsglieder ausgeführt sind.

Derartige Installationsboxen werden als Brandschutzelemente eingesetzt, um im Falle eines Brandes die Brandseite der Durchbrechung, in die die Installationsbox eingesetzt ist, von der anderen Seite zur Unterbindung einer Brandausbreitung durch die Durchbrechung hindurch abzuschotten. Eingesetzt werden derartige Installationsboxen vor allem bei solchen Installationsdurchbrüchen durch eine Wand, Decke oder einen Boden eines Gebäudes, die prinzipiell für eine Um- oder Nachrüstung zugänglich sein sollen, und um solche Installationen, die selbst brennbar sind. Letzteres ist beispielsweise bei elektrischen Kabeln der Fall. Eingesetzt werden vor allem bei größeren Gebäuden derartige, den Brandschutzanforderungen genügende Installationsboxen anstelle einer direkten Durchleitung der Kabel durch beispielsweise eine Wand, damit die Möglichkeit einer Nach- oder auch Uminstallation von verlegten Kabeln problemlos möglich ist.

Eine derartige Installationsbox älterer Machart besteht aus einem vorgefertigten Gehäuse, welches in der abzuschottenden Durchbrechung angeordnet und in aller Regel mit mineralischem Bindemittel an die Wand angeschlossen wird. Das Gehäuse trägt an seinen Innenseiten Platten aus einem Intumeszenzmaterial. Dieses schäumt bei entsprechender Temperatureinwirkung unter Vergrößerung seines Volumens um ein Vielfaches auf. Dieses Material ist nicht brennbar. Im Brandfall erfolgt somit die einen Flammenübergriff behindernde Abschottung selbsttätig. Typischerweise sind zur Bereitstellung einer Rauchabdichtung nach einer Montage einer solchen Installationsbox in einem Durchbruch und nach dem Durchführen der zumindest einen Installation der verbleibende Hohlraum mittels eines Hartschaumkörpers oder durch entsprechende Blenden verschlossen. Je nach Größe der zu bestückenden Durchbrechung werden unterschiedlich große Installationsboxen bereitgestellt, aus denen der Installateur die größenmäßig passende auszuwählen hat. Diese können sich nicht nur hinsichtlich ihrer Größe, sondern auch hinsichtlich ihrer Querschnittsgeometrie unterscheiden. Bekannt sind auch Sonderformen einer solchen Installationsbox, bei der das Blechgehäuse den eigentlichen Durchleitungskanal nur dreiseitig einfasst. Derartige Installationsboxen werden verwendet, wenn sich der Durchbruch unmittelbar an die Oberseite des Bodens oder der Unterseite einer Decke angrenzend befindet.

Eine gegenüber dieser Ausgestaltung bereits verbesserte Installationsbox ist aus EP 2 802 049 A1 der Anmelderin bekannt. Diese Installationsbox besteht aus einzelnen Modulteilen, die als Verbund durch miteinander zusammenwirkende Steckverbindungsglieder zusammengehalten sind. Als Steckverbindungsglieder werden bei dieser vorbekannten Installationsbox Stecklaschen als männliche Verbindungsglieder und Laschenaufnahmen als weibliche Steckverbindungsglieder verwendet.

Durch diese vorbekannte Installationsbox ist eine besondere Variabilität in der Anpassung derselben an die Größe der auszubildenden Installationsbox möglich. Aus diesem Grunde können aus einzelnen Modulteilen in ihrer Größe unterschiedliche Installationsboxen durch Zusammenstecken unterschiedlicher Einzelteile zusammengesetzt werden. Bei einer solchen Laschenaufnahmen handelt es sich um eine aus dem diese tragenden Wandabschnitt ausgeprägten, hügelartigen Abschnitt, der durch zwei Einschnitte begrenzt ist. Die Laschenaufnahme ist somit einstückig und Teil des dieses tragenden Modulteils. Die Weite der Ausprägung bzw. die bereitgestellte Einsteckweite ist ausreichend, damit eine komplementäre Stecklasche darin eingeführt werden kann. Die Stecklasche selbst trägt einen Widerhaken, der in die Öffnung, aus der die Laschenaufnahme herausgeprägt ist, eingreift.

Aus US 2009/0159312 A1 ist eine Anordnung zum Verbinden von zwei Kabeltragsegmenten offenbart. Beim Gegenstand dieses Standes der Technik steht eine werkzeuglose Verbindung der beiden Kabeltragsegmente im Vordergrund, wobei durch diese Verbindungsanordnung zugleich eine ausreichende elektrische Verbindung zwischen den beiden Kabeltragsegmenten bereitgestellt ist. Die Verbindungsanordnung umfasst eine Federklammer, die in dem Verbindungsabschnitt eines der beiden zu verbindenden Kabeltragsegmente gehalten ist. Mit dem Verbindungsabschnitt dieses Kabeltragsegmentes bildet die Federklammer ein weibliches Steckverbindungsglied. In die durch die Federklammer geschaffene Aufnahme wird ein männliches Steckverbindungsglied des anderen Kabeltragsegmentes eingeführt. In Folge der Federvorspannung die Seitenholme der überlappend ineinandergesteckten Verbindungsabschnitte der beiden Kabeltragsegmente aneinander.

Auch wenn mit diesen vorbekannten Steckverbindungsgliedern sich in einfacher Weise Installationsboxen unterschiedlicher Größe ausbilden lassen, wäre es wünschenswert, wenn der Zusammenhalt von zwei durch Zusammenführen der komplementären Steckverbindungsteile zusammengesetzten Modulteilen verbessert wäre, und zwar vorzugsweise auch dergestalt, dass ohne Einbuße an die Verbindungsqualität eine einmal erstellte Verbindung zwischen zwei Modulteilen auch gelöst und neu verbunden werden kann und dass die Vorspannung, mit der die beiden Steckverbindungsglieder miteinander verbunden sind, höher ist.

Gelöst wird diese Aufgabe erfindungsgemäß, durch eine eingangs genannte, gattungsgemäße Installationsbox, bei der wenigstens eine Laschenaufnahme durch einen ersten Klemmabschnitt eines dieses weibliche Steckverbindungsglied tragenden Modulteils sowie eine diesen Abschnitt mit einem zweiten Klemmabschnitt überspannende Federklammer gebildet ist, welche Federklammer durch benachbart zu dem ersten Klemmabschnitt mittels die diesen Klemmabschnitt bildende Wand des Modulteils durchgreifende und sich an der Rückseite dieser Wand abstützenden Stützschenkeln gehalten ist, wobei der zweite Klemmabschnitt mit durch die Federklammer bereitgestellter Vorspannung auf das an dem ersten Klemmabschnitt anliegende männliche Steckverbindungsglied wirkt, wobei die Stützschenkel gebogene Endabschnitte der Federklammer sind, damit die endseitigen Stirnflächen der Stützschenkel an der Rückseite der die Federklammer tragenden Wand anliegen und dass die Stützschenkel einen ihre Breite vergrößernden Vorsprung an ihrer entgegen der Einsetzrichtung einer Stecklasche in die Laschenaufnahme gerichteten Seite tragen, dessen eine Vorsprungseite an der Rückwand des die Federklammer tragenden Wandabschnittes abgestützt ist, wenn in die Laschenaufnahme eine Stecklasche eingeschoben ist, dass die von jeweils einem Stützschenkel durchgriffenen Durchbrechungen sich bis in die Biegekante fortsetzen, an der dieser Wandabschnitt gegenüber der benachbarten Wand abgewinkelt ist, und dass die lichte Weite dieser Durchbrechungen in ihrer Erstreckung quer zur Längserstreckung der Federklammer der Breite des diese Durchbrechung durchgreifenden Stützschenkels entspricht.

Bei dieser Installationsbox ist die Laschenaufnahme im Unterschied zum Stand der Technik unter Mitwirkung einer Federklammer bereitgestellt. Die Federklammer wirkt mit einem Klemmabschnitt gegen einen weiteren Klemmabschnitt, der durch denjenigen Abschnitt eines Modulteils bereitgestellt ist, der die Federklammer trägt. Somit ist bei dieser Ausbildung einer Laschenaufnahme eine besonders effektive Klemmung einer darin eingeschobenen Stecklasche vorgesehen, wobei die beiden Klemmwiderlager in Klemmrichtung einander gegenüberliegend angeordnet sind. Die Kraft der Klemmung zum Ein- bzw. Verklemmen einer darin eingeführten Stecklasche resultiert aus der durch die Federklammer bereitgestellten Federkraft. Die Federklammer ist ein zusätzliches Teil, welches an dem diese Laschenaufnahme tragenden Modulteil montiert ist. Das zur Herstellung der Federklammer eingesetzte Material ist daher typischerweise ein anderes als dasjenige, aus dem das Modulteil selbst gefertigt ist. Die Federklammer ist typischerweise aus einem Federstahl hergestellt. Aus diesem Grunde kann durch die Federklammer nicht nur eine hinreichende Vorspannung auf eine in die Laschenaufnahme eingeführte Stecklasche ausgeübt werden, um diese sicher darin zu halten. Darüberhinaus gewährleistet die Federklammer auf Grund ihrer elastischen Materialeigenschaften, dass die Klemmverbindung zwischen Stecklasche und Laschenaufnahme ohne Einbuße an die Qualität der Klemmung hinnehmen zu müssen, auch mehrfach gelöst und neu erstellt werden kann. Zum Halten der Federklammer dienen Stützschenkel, die benachbart zu der ersten Klemmfläche diesen Wandabschnitt durchgreifen und sich wiederum an der Rückseite dieser Wand abstützen. Insofern dient die Rückseite dieser Wand bzw. dieses Wandabschnittes als Widerlager zum Aufbringen der gewünschten Klemmkraft. Zugleich wird die Federkraft genutzt, um die Federklammer an dem Wandabschnitt zu fixieren. In einer bevorzugten Ausgestaltung wirkt der Klemmabschnitt der Federklammer bereits ohne eingeschobene Stecklasche gegen den ersten Klemmabschnitt. Entsprechend größer ist dann die auf eine eingesteckte Stecklasche wirkende Klemmkraft.

Überraschend stellte sich heraus, dass trotz Einsatz einer separat gegenüber dem übrigen Modulteil hergestellten Federklammer aus einem Federstahl und anschließendes Montieren derselben an einem Modulteil dieses sogar kostengünstiger ist, verglichen mit einer Ausgestaltung, bei der die Laschenaufnahme unmittelbar aus dem Material des Modulteils geformt wird. Bislang war man der Auffassung, dass ein Einsatz zusätzlich hergestellter Teile und deren Montage an einem solchen Modulteil kostenträchtiger wäre als das Ausformen aus dem Modulteil selbst.

Typischerweise sind alle Laschenaufnahmen eines Modulteils in dieser Art ausgeführt.

Zur Verbesserung des Zusammenhaltes zweier komplementärer Steckverbindungsglieder der in Rede stehenden Art ist vorgesehen, dass der Klemmabschnitt der Federklammer eine Verriegelungssicke trägt. Diese taucht in eine Riegelaufnahme der in die Laschenaufnahme eingeschobenen Stecklasche ein. Sodann ist die Stecklasche in der Laschenaufnahme nicht nur durch die vorbeschriebene Klemmung, sondern auch durch einen Formschluss gesichert. Die Materialeigenschaften der Federklammer erlauben es, dass diese formschlüssige Verriegelung ohne Einbußen an die Federkraft gelöst und neu erstellt werden kann. Eine solche Verriegelungssicke kann nach Art einer noppenartigen Ausprägung ausgeführt sein. Eine solche Verriegelungssicke kann auch nach Art eines Widerhakens ausgeführt sein. Diese ist dann asymmetrisch mit einer flachen Einschubseite ausgebildet. Die Verriegelungsseite ist zweckmäßigerweise durch einen Materialeinschnitt begrenzt, so dass im Zuge der Prägung ein Teil der Sicke ausgestellt ist und eine Verriegelungskante bildet.

Der Klemmabschnitt der Federklammer sitzt gemäß einer bevorzugten Ausgestaltung zwischen zwei von der Klemmseite des Klemmabschnittes wegweisend angeordneten Bogenabschnitten. Diese gehen in Stützschenkel über. Die Stützschenkel sind entgegen den vorgenannten Bogenabschnitten gekrümmt, und zwar dergestalt, dass die endseitigen Stirnflächen der Stützschenkel an der Rückseite der die Federklammer tragenden Wand des Modulteils anliegen. Eine Federklammer gemäß dieser Bauart verfügt damit angrenzend an ihren Klemmabschnitt zu jeder Seite über einen S-förmig gebogenen Federklammerabschnitt, der im Bereich des Wendepunktes oder in enger Nachbarschaft hierzu den Durchtritt durch die Durchbrechung des Abschnittes der die Federklammer tragenden Wand des Modulteils bildet.

Bei der erfindungsgemäßen Installationsbox ist vorgesehen, dass diese S-förmig ausgebildeten Federklammerabschnitte in zwei bezüglich ihrer Federkraft getrennte Unterabschnitte unterteilt werden. Dieses dient dem Zweck, eine funktionale Trennung herbeizuführen, und zwar zwischen der Funktionalität des Haltens der Federklammer an dem die Federklammer tragenden Wandabschnitt und der Funktionalität des Einklemmens und gegebenenfalls des zusätzlichen Verriegelns einer in die Laschenaufnahme eingeführten Stecklasche. Erreicht wird dieses gemäß einer Ausgestaltung dadurch, dass die Stützschenkel einen ihre Breite vergrößernden Vorsprung an ihren entgegen der Einsetzrichtung einer Stecklasche in die Laschenaufnahme gerichteten Seite tragen. Dieser Vorsprung ist ausgeführt, damit dieser die Durchbrechung, durch die der jeweilige Federklammerendabschnitt hindurchgeführt ist, hintergreift und somit mit einer Vorsprungseite an der Rückwand des die Federklammer tragenden Wandabschnittes abgestützt ist. Vorteilhaft bei einer solchen Ausgestaltung ist zudem, dass dann die auf eine in die Laschenaufnahme eingeführte Stecklasche ausgeübte Klemmkraft auf Grund des dann kürzeren federwirksamen Anteils größer ist, verglichen mit einer Ausgestaltung, bei der der gesamte S-geformte Federklammerendabschnitt zugleich auch für die Bereitstellung der auf einer Stecklasche wirkenden Vorspannung dient. Entsprechendes gilt für den zum Halten der Federklammer an dem diese tragenden Wandabschnitt bereitgestellte Vorspannkraft. Bei einer solchen Ausgestaltung ist die Durchbrechung derart ausgeführt, dass die Stützschenkel mit ihrem Vorsprung problemlos durch eine in den die Federklammer tragenden Wandabschnitt eingebrachte Durchbrechung mit dem Vorsprung hindurchführbar ist, sich dieser anschließend allerdings ohne weiteres die diese Durchbrechung einfassende Wand hintergreift. Erreicht wird dieses in einfacher aber sehr wirkungsvoller Art und Weise dadurch, dass sich diese Durchbrechung bis in eine Biegekante zwischen dem die Federklammer tragenden Wandabschnitt und der benachbarten Wand des Modulteils erstreckt. Es ist dann möglich, die Federklammer in einer geneigten Anordnung durch die Durchbrechung hindurchzuführen. Auf Grund der rechtwinklig zur Längserstreckung der Federklammer verlaufenden endseitigen Stirnflächen, die sich ebenfalls an der Rückseite der Wand abstützen, wird hierdurch die Federklammer nach ihrer Montage quasi selbsttätig in ihre bestimmungsgemäße Position gebracht.

Einsetzen lässt sich die beschriebene Laschenaufnahme bei Installationsboxen, die aus zumindest zwei Modulteilen zusammengesetzt sind, also auch für solche Installationsboxen gemäß EP 2 802 049 A1. Bei einer Installationsbox, die im Unterschied zu der aus EP 2 802 049 A1 bekannten nicht die Variabilität in der Anpassung der Größe derselben aufweisen muss, ist vorgesehen, dass eine solche Installationsbox aus zwei Modulteilen zusammengesetzt ist. Jedes Modulteil umfasst zwei typischerweise in einem Winkel von 90 Grad aneinandergrenzende Wände. An der einen Wand befindet sich jeweils ein abgewinkelter Wandabschnitt. Hierbei handelt es sich um denjenigen, der die Laschenaufnahmen trägt. Zwei derartige Wandabschnitte können auf diese Weise durch translatorisches Zusammenschieben derselben zusammengesetzt und miteinander verbunden werden. Die Konzeption derartiger Modulteile zum Ausbilden einer Installationsbox ist auch ohne die Laschenaufnahmen möglich, wie diese vorbeschrieben sind.

Nachstehend ist die Erfindung anhand eines Ausführungsbeispiels unter Bezugnahme auf die beigefügten Figuren beschrieben. Es zeigen:
- **Fig. 1:**: Eine perspektivische Ansicht einer erfindungsgemäßen Installationsbox,
- **Fig. 2:**: eine vergrößerte Darstellung der hinteren oberen linken Ecke der Installationsbox der Figur 1 aus einer etwas anderen Perspektive mit den zum Verbinden der Modulteile verwendeten Steckverbindungsgliedern,
- **Fig. 3:**: eine Laschenaufnahme des einen Modulteils in einer vergrößerten perspektivischen Darstellung,
- **Fig. 4:**: eine perspektivische Ansicht einer Federklammer als Teil der Laschenaufnahme der Figur 3 aus einer ersten Blickrichtung,
- **Fig. 5:**: eine perspektivische Ansicht der Federklammer als Teil der Laschenaufnahme der Figur 3 aus einer weiteren Blickrichtung und
- **Fig. 6:**: eine perspektivische Ansicht des Modulteilausschnittes ähnlich derjenigen der Figur 2, jedoch ohne eingesetzter Federklammer.

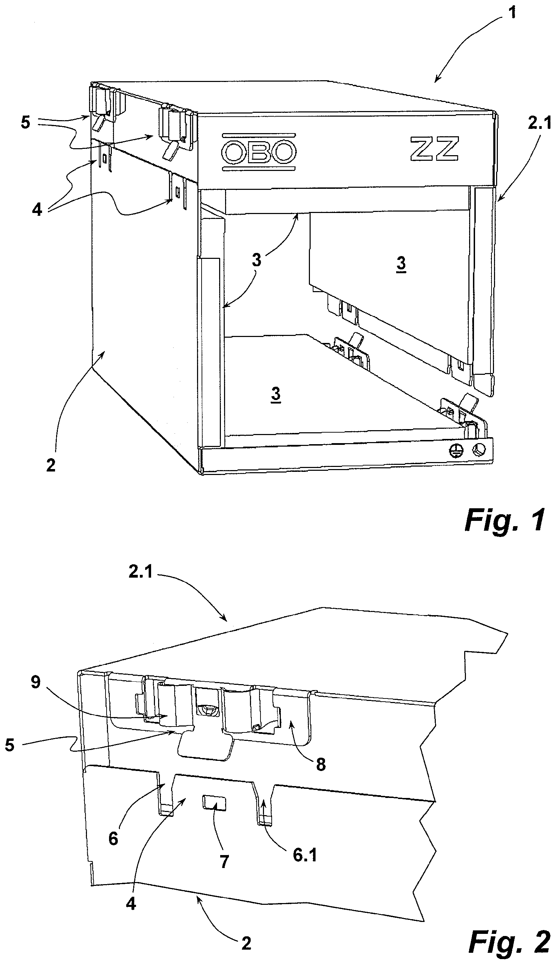

Eine als Kabelbox ausgeführte Installationsbox 1 dient, wenn in eine Wand-, Decken- oder Bodendurchbrechung eines Gebäudes eingesetzt, als Brandshott. Die in Figur 1 gezeigte Installationsbox 1 umfasst zwei Modulteile 2, 2.1. Jedes Modulteil 2, 2.1 bildet bei der aus den beiden Modulteilen 2, 2.1 zusammengesetzten Installationsbox 1 zwei Seitenwände aus. Das Modulteil 2 stellt bei dem dargestellten Ausführungsbeispiel die linke Seitenwand und das Bodenteil bereit, während das Modulteil 2.1 die rechte Seitenwand und das Deckelteil bereitstellt. Die Modulteile 2, 2.1 sind aus einem Stahlblech herstellt, typischerweise einem solchem, aus dem auch Kabelrinnen hergestellt werden. An die Innenwand jeder Seitenwand ist in den Modulteilen 2, 2.1 jeweils eine Intumeszenzplatte 3 angeordnet und an dieser gehalten.

Zum Verbinden der beiden Modulteile 2, 2.1 sind jeweils zusammenwirkende männliche und weibliche Steckverbindungsglieder vorgesehen. Bei den männlichen Steckverbindungsgliedern handelt es sich um Stecklaschen 4. Bei den weiblichen Steckverbindungsgliedern handelt es sich um Laschenaufnahmen 5. Die Stecklaschen 4 sind bei dem dargestellten Ausführungsbeispiel durch zwei eine solche Stecklasche 4 seitlich begrenzende Einschnitte 6, 6.1 (siehe Figur 2) begrenzt. In jede Stecklasche 4 ist eine Durchbrechung als Riegelaufnahme 7 eingebracht. Die Stecklaschen 4 befinden sich an dem oberen Rand der linken Seitenwand des Modulteils 2 sowie an dem unteren Rand der rechten Seitenwand des Modulteils 2.1.

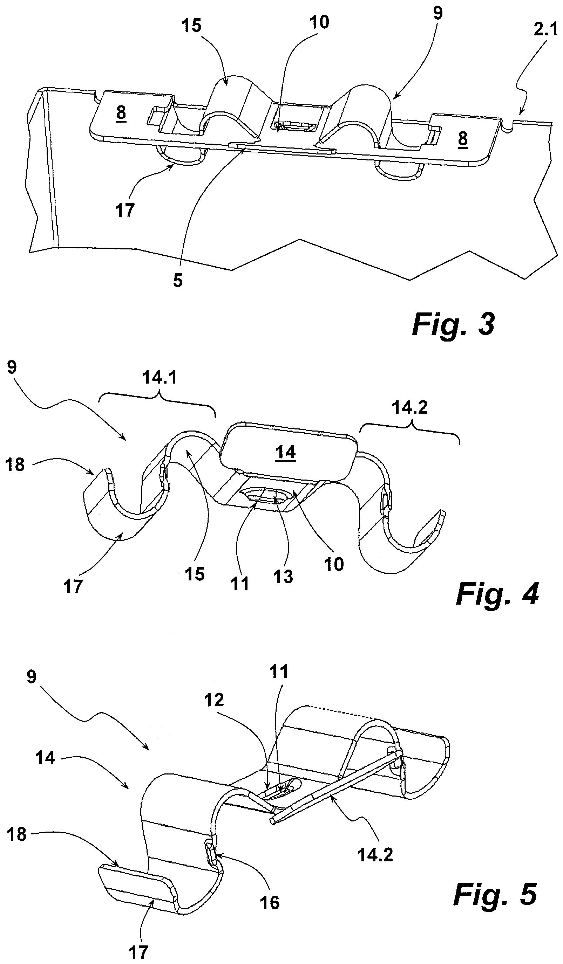

Die Laschenaufnahmen 5 sind, wie aus Figur 2 erkennbar, an von dem Deckel- bzw. Bodenteil abgewinkelten Wandabschnitten 8 angeordnet. Die Abwinklung gegenüber der benachbarten Wand beträgt 90 Grad, so dass diese Wandabschnitte 8 parallel zu den Seitenwänden verlaufen. Diese Wandabschnitte 8 tragen jeweils eine Federklammer 9 (siehe auch Figur 3). Eine solche Federklammer 9 ist aus einem Federstahlwerkstoff gefertigt und in ihre in den Figuren gezeigte Position an dem jeweiligen Wandabschnitt 8 durch einen Montagevorgang gebracht worden. Nachfolgend ist eine der Federklammern 9 beschrieben. Die übrigen sind identisch aufgebaut.

Die Federklammer 9 umfasst einen geraden Abschnitt 10, dessen zu dem Wandabschnitt 8 weisende Seite einen Klemmabschnitt stellt. Dieser wirkt auf die darunterliegende Oberseite des Wandabschnittes 8 mit einer gewissen Vorspannung. Von dem Klemmabschnitt 10 in Richtung zu dem Wandabschnitt 8 weisend ist eine durch einen Prägevorgang gebildete Verriegelungssicke 11 ausgestellt. Dem Prägevorgang vorangegangen ist die Bereitstellung eines Einschnittes 12 in den Klemmabschnitt 10, so dass in Folge des Ausprägens der Verriegelungssicke 11 diese eine flach geneigte Einschubseite 13 aufweist, jedoch der in Figuren 4 und 5 rückwärtige Abschnitt der Verriegelungssicke 11 ausgestellt ist und auf diese Weise einen wirksamen Riegel bereitstellt. Dieser greift in die Riegelaufnahme 7 einer in eine Laschenaufnahme 5 eingesetzten Stecklasche 4 ein, sodass dieser in der Laschenaufnahme 5 wirksam verriegelt ist. An der in den Figuren 4 und 5 gezeigten Vorderseite des Klemmabschnittes 10 ist eine geneigte Lasche 14 angeformt. Diese dient als Einführschräge zum Führen des freien Endes einer Stecklasche 4 in den zwischen dem Wandabschnitt 8 und dem Klemmabschnitt 10 gebildeten Klemmspalt. Darüberhinaus dient die geneigte Lasche 14 auch zum erleichterten Einführen eines Werkzeuges, beispielsweise eines Schlitzschraubendrehers, um zum Zwecke eines Lösens einer bereits erstellten Verbindung zweier Steckverbindungsglieder 4, 5 die Verriegelungssicke 11 der Laschenaufnahme 5 aus der Riegelaufnahme 7 der Stecklasche 4 herauszubringen.

Zu beiden Seiten des Klemmabschnittes 10 ist in Längserstreckung der Federklammer 9 ein S-förmig ausgeführter Federklammerendabschnitt 14.1, 14.2 angeformt. Nachstehend ist der Federklammerendabschnitt 14 beschrieben. Dieselben Ausführungen gelten gleichermaßen für den Federklammerendabschnitt 14.2. Der S-förmig gekrümmte Federendabschnitt 14.1 verfügt über einen ersten Bogenabschnitt 15, der bezüglich des Klemmabschnittes 10 konvex ausgeführt ist. Der Scheitel dieses Bogenabschnittes 15 ist asymmetrisch zwischen dem Wendepunkt in dem S-förmigen Krümmungsverlauf und dem Abschluss des Klemmabschnittes 10 angeordnet. Dabei ist der in eine Ebene projizierte Abstand des Scheitels des Bogenabschnittes 15 von dem Wendepunkt kürzer als der Abstand des Scheitels zu dem Beginn des Klemmabschnittes 10. Im Bereich des Krümmungswendepunktes trägt der Federklammerendabschnitt 14.1 einen Vorsprung 16. Dieser erstreckt sich entgegen der Einsetzrichtung einer Stecklasche 4 in die Laschenaufnahme 5. Die in den Figuren 4 und 5 erkennbare Oberseite des Vorsprunges 16 dient zur Abstützung der Federklammer 9 an der Rückseite des Wandabschnittes 8. An den den Vorsprung 16 tragenden Abschnitt des Federklammerendabschnittes 14.1 schließt sich der zweite Bogenabschnitt des Federklammerendabschnittes 14.1 an. Dieser zweite Bogenabschnitt stellt jeweils einen Stützschenkel 17 dar. Dieser ist soweit ausgeführt, dass die freie Stirnfläche 18 dieses Federklammerendabschnittes 14.1 nach oben weist, um ebenfalls an der Rückseite des Wandabschnittes 8 zwecks Abstützung anzuliegen. Infolge dieser Abstützung wird dieser Abschnitt als Stützschenkel 17 angesprochen.

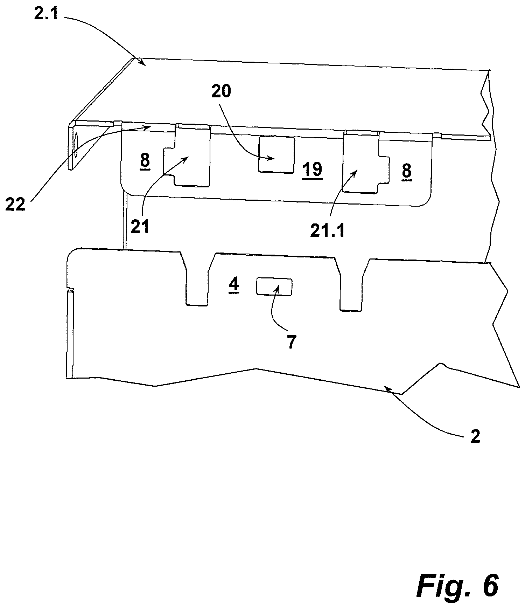

Figur 6 zeigt den Wandabschnitt der Laschenaufnahme 5 eine ohne daran montierte Federklammer 9. Dieser Wandabschnitt 8 stellt ebenfalls einen Klemmabschnitt 19 bereit. An diesem Klemmabschnitt 19 liegt der Klemmabschnitt 10 der Federklammer 9 an. Um ein flächiges Anliegen insbesondere auch bei nicht eingeführter Stecklasche 4 zu gewährleisten, befindet sich innerhalb des Klemmabschnittes 19 eine Durchbrechung 20. In diese taucht die Verriegelungssicke 11 bei nicht in die Laschenaufnahme 5 eingesetzter Stecklasche 4 ein. Sollte die Verriegelungssicke 11 eine größere Höhe aufweisen als die Materialstärke einer Stecklasche 4, dann wird aufgrund der Durchbrechung 20 die gewünschte Klemmung jedenfalls nicht behindert.

Benachbart zu dem Klemmabschnitt 19 des Wandabschnittes 8 befinden sich zwei Haltedurchbrechungen 21, 21.1. Nachstehend ist die Haltedurchbrechung 21 beschrieben. Dieselben Ausführungen gelten gleichermaßen für die Haltedurchbrechung 21.1. Die Haltedurchbrechung 21 stellt eine Durchbrechung durch den Wandabschnitt 8 dar und erstreckt sich in Querrichtung bis einschließlich der Kante 22, die durch die Abwinklung des Wandabschnittes 8 von der benachbarten Wand - hier dem Deckelteil - ausgebildet ist. Die lichte Weite der Haltedurchbrechung 21 in einer Draufsicht auf die Haltedurchbrechung 21 entspricht der Breite des Federklammerendabschnittes 14.1, jedoch ohne Berücksichtigung der durch den Vorsprung 16 gebildeten Auskragung. Montiert wird die Federklammer 9 an dem Wandabschnitt 8 durch Eindrücken der beiden Stützschenkel 17 in die jeweilige Haltedurchbrechung 21, 21.1 und zwar in einer etwas gewinkelten Raumlage der Federklammer 9 zu einer lotrechten Montage, damit der Vorsprung 16 durch die jeweilige Haltedurchbrechung 21 bzw. 21.1 hindurchgeführt werden kann. Die lichte Breite der Haltedurchbrechungen 21, 21.1 in Längserstreckung der Federklammer 9 ist geringer als die Spannweite seines Stützschenkels 17 in unbelastetem Zustand. Aus diesem Grund wird bei der Montage der als Bogenabschnitt ausgeführte Stützschenkel 17 etwas zusammengedrückt. Sobald dieser durch die jeweilige Haltedurchbrechung 21 bzw. 21.1 hindurchgeführt ist, entspannt sich dieser wieder, sodass das freie Ende mit der Stirnfläche 18 den Wandabschnitt 8 hintergreift (siehe Figur 3). Bei der montierten Federklammer 9 hintergreift ebenfalls der obere Abschluss des Vorsprunges 16 den Wandabschnitt 8. Durch diesen Vorsprung ist eine Teilung der Funktionalität der Federklammer 9 bereitgestellt. Der Stützschenkel 17 dient dem Halten der Federklammer 9 an dem Wandabschnitt 8. Der Bogenabschnitt 15 dient aufgrund der asymmetrischen Anordnung seines Scheitelpunktes zur Bereitstellung der für das Einklemmen einer Stecklasche 4 gewünschten Vorspannung und Klemmkraft.

Montiert werden die beiden Modulteile 2, 2.1 in dem diese, wie in Figur 1 durch die Blockpfeile angedeutet, zusammengeführt werden. Bei diesem Vorgang werden die Stecklaschen 4 in die Laschenaufnahmen 5 eingeschoben. Dieses erfolgt gegen die Rückstellkraft der auf die Klemmabschnitte 10 wirkenden Bogenabschnitte 15. Sind die Stecklaschen 4 weit genug eingeführt, rasten die Verriegelungssicken 11 in die Riegelaufnahmen 7 der Stecklaschen 4 ein. Dieses ist haptisch spürbar und hörbar, so dass hierdurch eine die Montage vornehmende Person eine Rückmeldung erhält, wann die beiden Modulteile 2, 2.1 bestimmungsgemäß zusammengesetzt sind.

Die Erfindung ist anhand eines Ausführungsbeispiels beschrieben worden. Ohne den Umfang der geltenden Ansprüche zu verlassen, ergeben sich für einen Fachmann zahlreiche weitere Ausgestaltungen, die Erfindung verwirklichen zu können.

### Bezugszeichenliste

- 1: Installationsbox
- 2, 2.1: Modulteil
- 3: Intumeszenzplatte
- 4: Stecklasche
- 5: Laschenaufnahme
- 6, 6.1: Einschnitt
- 7: Riegelaufnahme
- 8: Wandabschnitt
- 9: Federklammer
- 10: Klemmabschnitt
- 11: Verriegelungssicke
- 12: Einschnitt
- 13: Einschubseite
- 14: Lasche
- 14.1, 14.2: Federklammerendabschnitt
- 15: Bogenabschnitt
- 16: Vorsprung
- 17: Bogenabschnitt
- 18: Stirnfläche
- 19: Klemmabschnitt
- 20: Durchbrechung
- 21, 21,1: Haltedurchbrechung
- 22: Kante

## Patentansprüche

1. Installationsbox, einzusetzen in einen Wand-, Decken- oder Bodendurchbruch, zum Durchleiten einer Installation und zur Bereitstellung eines im Brandfalle selbsttätig die Brandseite abschottenden Verschlusskörpers, welche Installationsbox (1) aus zumindest zwei einzelnen Modulteilen (2, 2.1) zusammengesetzt ist, wobei der Verbund der Modulteile (2, 2.1) sich miteinander zusammenwirkende Steckverbindungsglieder (4, 5) zusammengehalten ist und die komplementären Steckverbindungsglieder (4, 5) durch Stecklaschen (4) als männliche Steckverbindungsglieder und durch Laschenaufnahmen (5) als weibliche Steckverbindungsglieder ausgeführt sind, **dadurch gekennzeichnet, dass** wenigstens eine Laschenaufnahme (5) durch einen ersten Klemmabschnitt (19) eines dieses weibliche Steckverbindungsglied tragenden Modulteils (2, 2.1) sowie eine diesen Abschnitt mit einem zweiten Klemmabschnitt (10) überspannende Federklammer (9) gebildet ist, welche Federklammer (9) durch benachbart zu dem ersten Klemmabschnitt (19) mittels die diesen Klemmabschnitt (19) bildende Wand (8) des Modulteils (2, 2.1) durchgreifende und sich an der Rückseite dieser Wand (8) abstützenden Stützschenkeln (17) gehalten ist, wobei der zweite Klemmabschnitt (10) mit durch die Federklammer (9) bereitgestellter Vorspannung auf das an dem ersten Klemmabschnitt (19) anliegende männliche Steckverbindungsglied (5) wirkt, wobei die Stützschenkel (17) gebogene Endabschnitte der Federklammer (9) sind, damit die endseitigen Stirnflächen (18) der Stützschenkel an der Rückseite der die Federklammer (9) tragenden Wand (8) anliegen und dass die Stützschenkel einen ihre Breite vergrößernden Vorsprung (16) an ihrer entgegen der Einsetzrichtung einer Stecklasche (4) in die Laschenaufnahme (5) gerichteten Seite tragen, dessen eine Vorsprungseite an der Rückwand des die Federklammer (9) tragenden Wandabschnittes (8) abgestützt ist, wenn in die Laschenaufnahme (5) eine Stecklasche (4) eingeschoben ist, dass die von jeweils einem Stützschenkel (17) durchgriffenen Durchbrechungen (21, 21.1) sich bis in die Biegekante fortsetzen, an der dieser Wandabschnitt (8) gegenüber der benachbarten Wand abgewinkelt ist, und dass die lichte Weite dieser Durchbrechungen (21, 21.1) in ihrer Erstreckung quer zur Längserstreckung der Federklammer (9) der Breite des diese Durchbrechung (20) durchgreifenden Stützschenkels (17) entspricht.

2. Installationsbox nach Anspruch 1, **dadurch gekennzeichnet, dass** der von der Federklammer (9) bereitgestellte zweite Klemmabschnitt (10) eine Verriegelungssicke (11) trägt, die zum Verriegeln einer Stecklasche (4) in der Laschenaufnahme (5) in eine Riegelaufnahme (7) der Stecklasche (4) eintaucht.

3. Installationsbox nach Anspruch 2, **dadurch gekennzeichnet, dass** die Verriegelungssicke (11) asymmetrisch mit einer flachen Einschubseite (13) ausgebildet ist.

4. Installationsbox nach Anspruch 3, **dadurch gekennzeichnet, dass** die Verriegelungssicke (11) durch eine Prägung mit einem die Sperrseite derselben begrenzenden Materialeinschnitt gebildet ist.

5. Installationsbox nach einem der Ansprüche 1 bis 4, **dadurch gekennzeichnet, dass** der Klemmabschnitt (10) der Federklammer (9) zwischen zwei Bogenabschnitten (15) der Federklammer (9) sitzt, wobei jeder Bogenabschnitt (15) in einen Stützschenkel (17) übergeht.

6. Installationsbox nach einem der Ansprüche 1 bis 5, **dadurch gekennzeichnet, dass** an den Klemmabschnitt (10) der Federklammer (9) eine geneigt abgewinkelte Lasche (14) angeformt ist.

7. Installationsbox nach einem der Ansprüche 1 bis 6, **dadurch gekennzeichnet, dass** das den ersten Klemmabschnitt bildende Teil des Modulteils (2, 2.1) ein gegenüber der benachbarten Wand abgewinkelter Wandabschnitt (8) ist.

8. Installationsbox nach einem der Ansprüche 1 bis 7, **dadurch gekennzeichnet, dass** alle Laschenaufnahmen (5) der Modulteile (2, 2.1) nach einem der Ansprüche 1 bis 9 ausgebildet sind.

9. Installationsbox nach einem der Ansprüche 1 bis 8, **dadurch gekennzeichnet, dass** jedes Modulteil (2, 2.1) zwei aneinander grenzende Wände oder Wandabschnitte der Installationsbox (1) umfasst.

## Claims

1. Installation box, to be inserted in a wall, ceiling, or floor aperture, for transfer of contacts of an installation and, in the event of a fire, to provide a closure body such as will automatically serve as a bulkhead on the fire side, said installation box (1) being composed of at least two individual module parts (2, 2.1), wherein the composite of the module parts (2, 2.1) is held together by mutually interacting plug connection elements (4, 5), and the complementary plug connection elements (4, 5) are configured as plug tabs (4) as male plug connection elements, and as tab receivers (5) as female plug connection elements, **characterised in that** at least one tab receiver (5) is formed by a clamp section (19) of a module part (2, 2.1) carrying this female plug connection element, as well as a spring clamp (9) spanning this section with a second clamp section (10), said spring clamp (9) being held by support limbs (17), adjacent to the first clamp section (19), engaging through the wall (8) of the module part (2, 2.1), forming this clamp section (19), and supported on the rear side of this wall (8), wherein the second clamp section (10) takes effect, with the preliminary tension provided by the spring clamp (9), on the male plug connection element (5) in contact at the first clamp section (19), wherein the support limbs (17) are curved end sections of the spring clamp (9), such that the end-side face surfaces (18) of the support limbs are in contact on the rear side of the wall (8) carrying the spring clamp (9), and that the support limbs carry a projection (16), which enlarges their width, on their side directed against the insertion direction of a plug tab (4) into the tab receiver (5), of which one projection side is supported at the rear wall of the wall section (8) carrying the spring clamp (9) when a plug tab (4) is pushed into the tab receiver (5), that the passage openings (21, 21.1), through which a support limb (17) engages in each case, extend as far as into the curve edge at which this wall section (8) is angled off in relation to the adjacent wall, and that the clear width of these passage openings (21, 21.1) corresponds in its extension, transverse to the longitudinal extension of the spring clamp (9), to the width of the support limb (17) engaging through this passage opening (20).

2. Installation box according to claim 1, **characterised in that** the second clamp section (10), provided by the spring clamp (9), carries a locking reinforcing seam (11), which, in order to lock a plug tab (4) in the tab receiver (5), inserts into a locking receiver (7) of the plug tab (4).

3. Installation box according to claim 2, **characterised in that** the locking reinforcing seam (11) is configured as asymmetric to a flat insertion side (13).

4. Installation box according to claim 3, **characterised in that** the locking reinforcing seam (11) is formed by an embossing, with a material incision which delimits the blocking side of the embossing.

5. Installation box according to any one of claims 1 to 4, **characterised in that** the clamping section (10) of the spring clamp (9) is located between two curved sections (15) of the spring clamp (9), wherein each curved section (15) merges into a support limb (17).

6. Installation box according to any one of claims 1 to 5, **characterised in that** a tab (14), inclined at an angle, is formed at the clamp section (10) of the spring clamp (9).

7. Installation box according to any one of claims 1 to 6, **characterised in that** the part of the module part (2, 2.1), forming the first clamp section, is a wall section (8) set at an angle in relation to the adjacent wall.

8. Installation box according to any one of claims 1 to 7, **characterised in that** all the tab receivers (5) of the module parts (2, 2.1) are configured in accordance with one of claims 1 to 9.

9. Installation box according to any one of claims 1 to 8, **characterised in that** each module part (2, 2.1) comprises two walls or wall sections delimiting one another or wall sections of the installation box (1).

## Revendications

1. Boîte d'installation, à mettre en place dans une ouverture de mur, de plafond ou de sol, pour faire passer une installation et pour mettre à disposition un corps de fermeture assurant automatiquement, en cas d'incendie, le confinement par rapport au côté de l'incendie, laquelle boîte d'installation (1) est composée d'au moins deux parties modulaires (2, 2.1) individuelles, lequel assemblage des parties modulaires (2, 2.1) étant maintenu à l'aide d'éléments de raccord enfichables (4, 5) agissant conjointement et les éléments de raccord enfichables (4, 5) complémentaires étant configurés en pattes à enficher (4) faisant office d'éléments de raccord mâles et par des logements pour patte (5) faisant office d'éléments de raccord femelles, **caractérisée en ce qu'**au moins un logement pour patte (5) est formé par un premier tronçon de serrage (19) d'une partie modulaire (2, 2.1) supportant cet élément de raccord femelle ainsi que d'une attache à ressort (9) laquelle enjambe ce tronçon à l'aide d'un second tronçon de serrage (10), ladite attache à ressort (9) étant maintenue au voisinage du premier tronçon de serrage (19) à l'aide de montants d'appui (17) qui traversent la paroi (8) de la partie modulaire (2, 2.1) qui forme ce tronçon de serrage (19) et qui s'appuient au dos de cette paroi (8), le second tronçon de serrage (10) agissant, grâce à la précontrainte mise à disposition par l'attache à ressort (9), sur l'élément de raccord mâle (5) en appui sur le premier tronçon de serrage (19), les montants d'appui (17) étant des tronçons d'extrémité courbés de l'attache à ressort (9), de telle sorte que les surfaces frontales (18) à l'extrémité des montants d'appui sont en appui au dos de la paroi (8) supportant l'attache à ressort (9) et **en ce que** les montants d'appui supportent une saillie (16) augmentant leur largeur sur leur côté orienté à l'opposé du sens d'engagement d'une patte à enficher (4) dans le logement pour patte (5), dont un côté de saillie est en appui au dos du tronçon de paroi (8) supportant l'attache à ressort (9), lorsqu'une patte à enficher (4) est engagée dans le logement pour patte (5), **en ce que** les passages (21, 21.1) traversés respectivement par un montant d'appui (17) se prolongent jusqu'à l'arête courbe qui marque l'angle de ce tronçon de paroi (8) par rapport à la paroi voisine et **en ce que** la largeur nette de ces ouvertures (21, 21.1) dans leur étendue transversale par rapport à l'étendue longitudinale de l'attache à ressort (9) correspond à la largeur du montant d'appui (17) qui traverse cette ouverture (20).

2. Boîte d'installation selon la revendication 1, **caractérisée en ce que** le second tronçon de serrage (10) mis à disposition par l'attache à ressort (9) supporte une gorge de verrouillage (11) qui, pour verrouiller une patte à enficher (4) dans le logement pour patte (8), s'engage dans un logement de verrouillage (7) de la patte à enficher (4).

3. Boîte d'installation selon la revendication 2, **caractérisée en ce que** la gorge de verrouillage (11) est conformée de manière asymétrique, avec un côté d'engagement plat (13).

4. Boîte d'installation selon la revendication 3, **caractérisée en ce que** la gorge de verrouillage (11) est conformée par un emboutissage avec une coupe dans le matériau limitant la face de verrouillage de celle-ci.

5. Boîte d'installation selon l'une des revendications 1 à 4, **caractérisée en ce que** le tronçon de serrage (10) de l'attache à ressort (9) est logé entre deux tronçons arqués (15) de l'attache à ressort (9), chaque tronçon arqué (15) se poursuivant par un montant d'appui (17)

6. Boîte d'installation selon l'une des revendications 1 à 5, **caractérisée en ce qu'une** patte (14) d'angle inclinée est formée sur le tronçon de serrage (10) de l'attache à ressort (9)

7. Boîte d'installation selon l'une des revendications 1 à 6, **caractérisée en ce que** la zone de la partie modulaire (2, 2.1) formant le premier tronçon de serrage est un tronçon de paroi (8) plié par rapport à la paroi voisine (8).

8. Boîte d'installation selon l'une des revendications 1 à 7, **caractérisée en ce que** tous les logements pour patte (5) des parties modulaires (2, 2.1) sont conformés selon l'une des revendications 1 à 9.

9. Boîte d'installation selon l'une des revendications 1 à 8, **caractérisée en ce que** chaque partie modulaire (2, 2.1) comporte deux parois ou tronçons de paroi de la boîte d'installation (1), voisins l'un de l'autre.
